# EUROPÄISCHE PATENTANMELDUNG

(11) **EP 1 890 110 A2**
(43) Veröffentlichungstag der Anmeldung: **20.02.2008**
(21) Anmeldenummer: 07113984.4
(22) Anmeldetag: 08.08.2007
(51) Int. Cl.: G01C 21/34

(54) **Verfahren zur Bestimmung einer optimalen Fahrstrategie eines Kraftfahrzeugs und entsprechend ausgestaltete Vorrichtung sowie zugehörige Anzeige und zugehöriges Kraftfahrzeug**

(30) Priorität: 18.08.2006 DE 102006038919; 23.12.2006 DE 102006061392
(71) Anmelder: Volkswagen Aktiengesellschaft, 38436 Wolfsburg (DE)
(72) Erfinder: Carsten, Deeg, 10587 Berlin (DE); Torsten, Crull, 38531 Rötgesbüttel (DE); Volker Käse, 30161 Hannover (DE); Martin, Weiser, 31234 Edemissen (DE)
(74) Vertreter: Banzer, Hans-Jörg

(57) **Zusammenfassung**

Ein Verfahren zur Bestimmung einer optimalen Fahrstrategie eines Kraftfahrzeugs (21) für eine Fahrt von einem Startpunkt zu einem Zielpunkt wird zusammen mit einer entsprechend ausgestalteten Vorrichtung (1) bereitgestellt. Dabei umfasst die Bestimmung der optimalen Fahrstrategie die Ermittelung einer Route (3) von dem Startpunkt zu dem Zielpunkt. Die Fahrstrategie wird in Abhängigkeit von mindestens zwei Parametern (A, B, F, S) optimiert, welche aus folgender Gruppe ausgewählt sind: eine Attraktivität (A) der Route (3), eine Fahrtdauer (F), einen Komfort, Betriebskosten (B) und Sicherheit (S). Zusätzlich wird eine Kraftfahrzeug-Anzeige (23) beschrieben, welche kombiniert eine Abweichung von einem bestimmten Optimum eines Betriebszustandes, insbesondere eines Energieverbrauchsbetriebszustandes, des Kraftfahrzeugs (21) und eine Maßnahme zur Verbesserung des Betriebszustandes darstellt.

## Beschreibung

Die vorliegende Erfindung betrifft ein Verfahren zur Bestimmung einer optimalen Fahrstrategie für ein Kraftfahrzeug und eine entsprechend ausgestaltete Vorrichtung, mit welcher die optimale Fahrstrategie bestimmt werden kann.

Nach dem Stand der Technik wird eine Fahrstrategie für ein Kraftfahrzeug dadurch bestimmt, dass vor einem Antritt einer Fahrt mit dem Kraftfahrzeug beispielsweise mittels einer Navigationsvorrichtung des Kraftfahrzeugs eine Route bestimmt wird, über welche das Kraftfahrzeug von einem momentanen Standort des Kraftfahrzeugs zu einem vorgegebenen Ziel kommt. Dabei werden in der Regel als Optimierungskriterien entweder eine kürzeste Entfernung (die Navigationsvorrichtung sucht die kürzeste Route zwischen dem Standort und dem Ziel) oder eine zeitlich kürzeste Route (die Navigationsvorrichtung sucht diejenige Route, über welche das Kraftfahrzeug am schnellsten von dem Standort zu dem Ziel gelangt) der Navigationsvorrichtung vorgegeben.

Es ist die Aufgabe der vorliegenden Erfindung, die Fahrstrategie für ein Kraftfahrzeug gegenüber dem Stand der Technik zu verbessern. Darüber hinaus ist es eine weitere Aufgabe der vorliegenden Erfindung, eine Anzeige für ein Kraftfahrzeug bereitzustellen, mit deren Hilfe ein Fahrer des Kraftfahrzeugs unterstützt wird, einen für eine optimale Fahrroute berechneten Energieverbrauch des Kraftfahrzeugs einzuhalten.

Erfindungsgemäß werden diese Aufgaben durch ein Verfahren zur Bestimmung einer optimalen Fahrstrategie eines Kraftfahrzeugs gemäß Anspruch 1, eine entsprechend ausgestaltete Vorrichtung gemäß Anspruch 19, eine Anzeige gemäß Anspruch 22 und ein Kraftfahrzeug gemäß Anspruch 29 gelöst. Die abhängigen Ansprüche definieren bevorzugte und vorteilhafte Ausführungsformen der Erfindung.

Im Rahmen der vorliegenden Erfindung wird ein Verfahren zur Bestimmung einer optimalen Fahrstrategie für ein Kraftfahrzeug bereitgestellt, wobei die Bestimmung der optimalen Fahrstrategie für eine Fahrt von einem Startpunkt der Fahrt zu einem Zielpunkt der Fahrt eine Ermittlung einer Fahrtroute von dem Startpunkt zu dem Zielpunkt umfasst. Dabei wird die Optimierung der Fahrstrategie und damit die Bestimmung der Route abhängig von mindestens zwei Parametern vorgenommen, welche aus folgender Gruppe ausgewählt sind:
● Eine Attraktivität der Route für einen Insassen des Fahrzeugs. Dabei kann die Attraktivität wiederum abhängig von mindestens einem Merkmal sein, welches aus folgender Gruppe ausgewählt ist:
   o Eine Anzahl von Sehenswürdigkeiten, welche sich innerhalb eines vorbestimmten Abstands zu der Route befinden. Hinsichtlich der Attraktivität ist diejenige von zwei Routen die bevorzugte, an welcher eine größere Anzahl von Sehenswürdigkeiten liegen.
   o Eine vorgegebene Klassifizierung der Sehenswürdigkeiten. Dabei können die Sehenswürdigkeiten hinsichtlich ihrer Attraktivität eine Gewichtung bzw. Klassifizierung aufweisen, welche bei einem Vergleich von zwei Routen berücksichtigt wird. Um die Attraktivität einer Route zu ermitteln, werden dabei die Gewichtungen der in einem vorbestimmten Abstand zu der Route befindlichen Sehenswürdigkeiten beispielsweise aufaddiert.
   o Die Vermeidung von besonders unattraktiven Streckenabschnitten, wie z.B. Tunneln oder Baustellen dient ebenfalls der Erhöhung der Attraktivität.
   o Eine Information über eine Wettervorhersage über bestimmten Routenabschnitten. Umso besser das Wetter für einen bestimmten Routenabschnitt vorhergesagt ist, umso attraktiver ist der Routenabschnitt.
   o Ein Straßenbelag der Routenabschnitte. Umso besser der Straßenbelag eines bestimmten Routenabschnitts ist, desto attraktiver ist der entsprechende Routenabschnitt.
● Eine Fahrtdauer, welche ein Kraftfahrzeug zur Fahrt über die Route von dem Startpunkt zu dem Zielpunkt benötigt. Dabei wird beispielsweise berücksichtigt, dass eine Fahrt über eine Autobahn mit einer in der Regel höheren Durchschnittsgeschwindigkeit zurückzulegen ist, als eine Fahrt innerhalb einer Ortschaft.
● Einen Komfort, welchen ein Insasse des Kraftfahrzeugs während der Fahrt erlebt. Dabei kann der Komfort wiederum abhängig von mindestens einem Merkmal sein, welches aus folgender Gruppe ausgewählt ist:
   o Einem Anteil von Abschnitten der Route, bei welchen eine Querbeschleunigung des Kraftfahrzeugs größer als ein vorbestimmter Wert ist. Unter einer Querbeschleunigung wird dabei eine Beschleunigung senkrecht zu der Fahrtrichtung des Kraftfahrzeugs und parallel zur Fahrebene verstanden. Eine Querbeschleunigung tritt beispielsweise auf, wenn das Fahrzeug eine Kurve fährt. Mit anderen Worten ist der Komfort einer Route für dieses Merkmal für einen unsportlichen Fahrer (bzw. einen Fahrer, welcher aktuell eine unsportliche Fahrweise vorzieht) umso größer, je geringer die Querbeschleunigungen auf der Route sind. Um die Querbeschleunigungen gering zu halten, können zum einen Routenabschnitte mit möglichst wenigen Kurven bevorzugt werden oder es kann die Fahrgeschwindigkeit in einer Kurve vermindert werden, was wiederum einen negativen Einfluss auf die Fahrtdauer aufweist.
   o Einem Anteil von Abschnitten der Route, bei welchen eine positive Beschleunigung des Kraftfahrzeugs größer als ein vorbestimmter Wert ist. Das Gegenteil der positiven Beschleunigung ist eine negative Beschleunigung. Bei einer positiven Beschleunigung erhöht sich die Geschwindigkeit des Kraftfahrzeugs, während das Kraftfahrzeug bei der negative Beschleunigung abbremst und dadurch seine Geschwindigkeit verringert. Der Komfort einer Route ist also gemäß diesem Merkmal bei einem unsportlichen Fahrer um so geringer, je häufiger das Fahrzeug stark beschleunigen muss oder je häufiger die positive Beschleunigung über einem vorbestimmten Wert liegt. Um möglichst selten beschleunigen zu müssen, kann die Route beispielsweise derart gewählt werden, dass das Fahrzeug möglichst selten stoppen muss, indem beispielsweise Abschnitte mit Ampeln oder Stopp-Zeichen gemieden werden.
   o Einem Anteil von Abschnitten der Route, bei welchen eine negative Beschleunigung des Kraftfahrzeugs größer als ein vorbestimmter Wert ist. Ähnlich wie bei der positiven Beschleunigung wird der Komfort einer Route gemäß diesem Merkmal für eine unsportliche Fahrweise umso geringer erachtet, je häufiger das Fahrzeug stark bremsen muss oder je häufiger die negative Beschleunigung über einem vorbestimmten Wert liegt. Um möglichst selten bremsen zu müssen, kann die Route beispielsweise derart gewählt werden, dass das Fahrzeug möglichst selten anhalten muss, indem beispielsweise Abschnitte mit Ampeln oder Stoppzeichen gemieden werden. Darüber hinaus kann eine Wahrscheinlichkeit für ein starkes Bremsen verringert werden, indem Routenabschnitte, auf welchen zur Fahrzeit einen dichter Verkehr herrscht, gemieden werden, da bei einem dichten Verkehr die Wahrscheinlichkeit höher ist, dass das Kraftfahrzeug abrupt bremsen muss, als wenn sich das Kraftfahrzeug nahezu allein auf der Straße befindet.
   o Anteile von Abschnitten mit unebenem Straßenbelag sollten ebenfalls vermieden werden, um den Komfort zu steigern. Auch dieses Merkmal kann bei einer sportlichen Fahrweise als positiv eingeschätzt werden.
   o Das Klima auf Abschnitten der gewählten Route bestimmt ebenfalls den Komfort. Je angenehmer das Klima für einen Menschen auf einem Routenabschnitt ist bzw. vorhergesagt wird, desto besser ist der Routenabschnitt hinsichtlich des Komforts einzuschätzen.
● Betriebskosten. Dabei werden zu den Betriebskosten sowohl Kosten gezählt, welche zur Bestimmung der Fahrstrategie benötigt werden, als auch Kosten gezählt, welche anfallen, damit die Route mit dem Fahrzeug bewältigt wird. Zu den Kosten zur Bestimmung der Fahrstrategie zählen beispielsweise Kosten zur Ermittlung von Verkehrsinformationen. Zu den Kosten, welche für die Fahrt über die Route mit dem Fahrzeug aufzubringen sind, zählen neben den Treibstoffkosten auch diejenigen Kosten, welche sich aus dem Verschleiß des Kraftfahrzeugs durch die Fahrt auf der Route ergeben, wie auch Straßenbenutzungskosten (z.B. Maut).
● Eine Sicherheit, welcher der Insasse während der Fahrt über die Route ausgesetzt ist. Dabei kann die Sicherheit der zu bestimmenden Route abhängig von mindestens einem Merkmal bestimmt werden, welches aus folgender Gruppe ausgewählt ist:
   o Einer Anzahl von Polizeistationen, welche sich an der Route oder innerhalb eines vorbestimmten Abstands von der Route befinden. Dabei ist die Sicherheit der Route umso höher anzusetzen, je größer diese Anzahl ist.
   o Einen Anteil von beleuchteten Abschnitten der Route. Bei einer Fahrt im dunklen ist die Sicherheit der im dunklen zu bewältigenden Abschnitte der Route umso höher, je höher der Anteil der Routenabschnitte ist, welche beleuchtet sind.
   o Einen Anteil von Routenabschnitten, welche durch Ortschaften oder Städte verlaufen. Die Sicherheit eines Routenabschnitts, welcher außerhalb einer Ortschaft verläuft, ist geringer zu bewerten, als eines Abschnitts, welcher innerhalb einer Ortschaft verläuft, da beispielsweise bei einem Unfall innerhalb der Ortschaft schneller Hilfe herbeigeholt werden kann.
   o Einer Anzahl von Unfallschwerpunkten, welche sich auf der Route befinden. Unter einem Unfallschwerpunkt wird dabei eine Stelle verstanden, an welcher verhältnismäßig viele Unfälle passieren.
   o Eine Anzahl von Pannenschwerpunkten, welche sich auf der Route befinden. Unter einem Pannenschwerpunkt wird dabei eine Stelle verschwanden, an welcher verhältnismäßig viele Pannen eines Kraftfahrzeugs auftreten, so dass eine Weiterfahrt des Kraftfahrzeugs unmöglich oder zumindest erschwert ist.
   o Eine Anzahl von Gefahrenpunkten auf oder in der Nähe der Route. Dabei wird unter einem Gefahrenpunkt auch eine Stelle verstanden, an welcher beispielsweise eine Kriminalitätsrate verhältnismäßig hoch ist oder an welcher aufgrund von einem schlechten Fahrbahnuntergrund (z.B. Schnee, Nässe, Baustelle) eine erhöhte Unfallgefahr vorliegt.
   o Einen Anteil von gesicherten Routenabschnitten. Dabei wird unter einem gesicherten Routenabschnitt ein Routenabschnitt verstanden, welcher durch Polizei oder andere eine Sicherheit erzeugende Mittel (z.B. Videokameras) gesichert sind. Weitere Sicherungsmaßnahmen sind z.B. Leitplanken, um ein Abkommen von der Fahrbahn zu verhindern, sowie Beleuchtungsmaßnahmen, um für bessere Sichtverhältnisse auf der Straße zu sorgen. Mit anderen Worten alle Maßnahmen, welche die Sicherheit auf dem Routenabschnitt erhöhen.
   o Einen Anteil von Routenabschnitten mit einer Geschwindigkeitsbegrenzung. Dabei wird eine Geschwindigkeitsbegrenzung bezüglich eines Unfallrisikos als positiv gewichtet. Allerdings können Geschwindigkeitsbegrenzungen, wobei das Kraftfahrzeug nur in Schrittgeschwindigkeit fahren darf, in Gegenden mit hoher Kriminalität auch als negativ bezüglich der Sicherheit angesehen werden, da dann ein Überfall durch Fußgänger ermöglicht wird.
   o Eine auf der Route vorhergesagte Wetterinformation, wobei gutes Wetter als bezüglich des Sicherheitsaspektes positiv angesehen wird.
   o Einen Anteil von Routenabschnitten mit einer relativ großen Längs- oder Querbeschleunigung. Dabei wird ein Routenabschnitt mit einer relativ starken Längs- oder Querbeschleunigung als bezüglich des Sicherheitsaspekts negativ eingeschätzt.

Vorteilhafter Weise kann jeder der mindestens zwei Parameter stufenlos gewichtet werden. Das heißt, beispielsweise der Fahrer des Kraftfahrzeugs kann stufenlos eine Gewichtung bei jedem der mindestens zwei Parameter vorgeben, wobei die Bestimmung der optimalen Fahrstrategie dann abhängig von den derart gewichteten Parameter erfolgt.

Bezüglich des Komforts der zu bestimmenden Route kann gerade bei sportlichen Fahrern der Komfort auch abhängig von einem Fahrspaß sein, welchen der Fahrer bei einer Fahrt entlang der Route empfindet. Bei sportlichen Fahrern werden die Merkmale hinsichtlich der Querbeschleunigung, positiven Beschleunigung und negativen Beschleunigung im Vergleich zu einem nicht sportlichen Fahrer hinsichtlich des Komforts der zu bestimmenden Route gerade gegenteilig gewertet, wie es oben bei den entsprechenden Merkmalen bereits angedeutet ist. Während hinsichtlich des Komforts der sportliche Fahrer gerade eine kurvige Route bevorzugt, entscheidet sich der nicht sportliche Fahrer eher für eine gerade Route. Eine sportliche Fahrweise steht auch im gewissen Widerspruch zu Sicherheitsmerkmalen oder der Fahrtdauer einer Route. Ein sportlicher Fahrer bevorzugt Landstraßen (meist negativ für die Fahrtdauer) und meidet Städte (zumindest nachts meist negativ hinsichtlich Sicherheit aufgrund fehlender Beleuchtung)

In Abhängigkeit von der Fahrstrategie kann eine aktuelle Fahrzeugeinstellung, eine Wahl eines Verkehrsinformationsanbieters und eine Sollenergiemenge im Energiespeicher eines Hybridantriebs gewählt werden. Dabei umfasst die aktuelle Fahrzeugeinstellung eine zum momentanen Zeitpunkt einem Antrieb des Kraftfahrzeugs zugeführte Leistung (z.B. eine Stellung des Gaspedals), eine auf die Räder des Kraftfahrzeugs ausgeübte Bremskraft (z.B. eine Stellung des Bremspedals) und einen Gang, in welchem das Kraftfahrzeug betrieben wird. Durch die Fahrzeugeinstellung kann beispielsweise die Geschwindigkeit des Kraftfahrzeugs und damit die Fahrtdauer, aber auch die Querbeschleunigung und die Beschleunigung und damit der Fahrkomfort beeinflusst werden. Wenn die Gewichtung der Betriebskosten gering ist oder wenn die Fahrtdauer hoch gewichtet ist, kann beispielsweise ein teuerer aber besserer Verkehrsinformationsanbieter gewählt werden, als wenn die Gewichtung der Betriebskosten hoch oder die Gewichtung der Fahrtdauer gering ist. Unter der Sollenergiemenge im Energiespeicher des Hybridantriebs wird dabei eine Energiemenge verstanden, welche mindestens im Energiespeicher des Hybridantriebs vorhanden sein soll. Wenn die Energie im Energiespeicher verbraucht ist, wird ein Verbrennungsmotor des Hybridantriebs zugeschaltet, um den Energiespeicher wieder aufzuladen. Wenn anhand der Fahrtroute und der aktuellen Position auf der Fahrtroute erkannt wird, dass in nächster Zeit ein Routenabschnitt folgt, auf welchem der Energiespeicher des Kraftfahrzeugs wieder aufgeladen werden kann (z.B. ein bergab verlaufender Routenabschnitt), kann diese Sollenergiemenge vorteilhafterweise abgesenkt und so ein Zuschalten des Verbrennungsmotors u.U. vermieden werden.

Unter die Fahrzeugeinstellung können auch weitere Fahrerassistenzsysteme (FAS) des Kraftfahrzeugs fallen, wie z.B. ACC (adaptives Cruise Control, wobei die Geschwindigkeit des Kraftfahrzeugs an die Geschwindigkeit eines vorher fahrenden Fahrzeugs angepasst wird), HCA (Heading Control Assist), wobei von dem Kraftfahrzeug gezielt in die Lenkung eingegriffen wird, um das Kraftfahrzeug z.B. in der Spur zu halten, eine Fahrwerkeinstellung und eine Sitzposition. Dabei wird die Fahrzeugeinstellung derart vorgenommen, dass damit die optimale Fahrstrategie erzielt wird. Dies umfasst beispielsweise eine Einstellung des Fahrwerks und der Sitzposition (bzw. eine Einstellung eines Sitzes des Kraftfahrzeugs), so dass die Einstellung an die vorgegebenen Parameter Komfort und Sicherheit angepasst ist. Dies bietet den Vorteil, dass diese Parameter nur einmal vorgegeben werden müssen und dann auch (ohne eine weitere Eingabe tätigen zu müssen) zu der entsprechenden Fahrzeugeinstellung führen.

Zur Bestimmung der optimalen Fahrstrategie berücksichtigt das erfindungsgemäße Verfahren insbesondere mindestens einen Informationsparameter, welcher aus der folgenden Gruppe ausgewählt ist:
● Eine aktuelle Verkehrsinformation. Darunter wird beispielsweise eine Information über Staus oder Baustellen, aber auch über Unfälle, eine Verkehrsdichte und Verkehrszeichen (z.B. Geschwindigkeitsbeschränkungen) verstanden, woraus dann abgeleitet werden kann, mit welcher Durchschnittsgeschwindigkeit ein bestimmter Abschnitt einer für die Fahrstrategie in Betracht kommenden Route durchfahren werden kann.
● Ein Höhenprofil der zu bestimmenden Route. Bei einem Vergleich von zwei Routen ist hinsichtlich der Fahrtdauer und der Betriebskosten bei sonst gleichen Merkmalen diejenige Route vorzuziehen, deren Höhenprofil weniger Höhenmeter aufweist.
● Ein Fahrzeit-Mittelwert für einen Routenabschnitt in Abhängigkeit von einer Uhrzeit, einer Jahreszeit und einem Wochentag derjenigen Zeit, zu welcher der entsprechende Routenabschnitt voraussichtlich bei der Fahrt des Kraftfahrzeugs befahren wird. Diese Informationen kann beispielsweise von dem Kraftfahrzeug selbst ermittelt worden sein, falls es sich bei dem Routenabschnitt um einen Routenabschnitt handelt, welchen das Kraftfahrzeug häufig und zu unterschiedlichen Zeiten befährt. Als weitere Informationsquelle können andere Kraftfahrzeuge dienen, welche den entsprechenden Routenabschnitt z.B. gerade befahren haben (FCD; Floating Car Data), falls die entsprechende Information von dem die Information besitzenden Fahrzeug zu dem Kraftfahrzeug, für das die Fahrstrategie zu bestimmen ist, direkt übermittelt werden kann (Car2Car) oder indirekt über einen zentralen Server. Durch die Abhängigkeit von der Uhrzeit kann beispielsweise vermieden werden, dass ein entsprechender Routenabschnitt, welcher morgens und abends aufgrund eines Berufsverkehrs sehr frequentiert wird, gerade zu dieser Zeit bei der Fahrt entlang der zu bestimmenden Route benutzt wird. Durch die Abhängigkeit von dem Wochentag kann vorteilhafterweise berücksichtigt werden, dass bestimmte Routen an Werktagen wesentlich frequentierter sind als an Feiertagen. Durch die Abhängigkeit von der Jahreszeit kann vorteilhafterweise berücksichtigt werden, dass bestimmte Routenabschnitte im Winter nicht oder nur sporadisch vom Schnee geräumt werden.
**●** Ein Kraftstoffverbrauchs-Mittelwert auf einem Abschnitt der zu bestimmenden Route in Abhängigkeit von der Uhrzeit, der Jahreszeit und dem Wochentag einer Zeit, zu welcher der entsprechende Abschnitt voraussichtlich befahren werden soll. Der Kraftstoffverbrauchs-Mittelwert kann in ähnlicher Weise wie der Fahrzeit-Mittelwert durch das eigene Fahrzeug oder durch andere Fahrzeuge (FCD, Car2Car) ermittelt werden. Auch hinsichtlich der Abhängigkeit von der Uhrzeit, der Jahreszeit und dem Wochentag gelten dieselben Überlegungen wie bei dem Fahrzeit-Mittelwert.
● Ein Wert, der die Straßenbeschaffenheit (eben oder uneben) und die erforderlichen Längs- und Querbeschleunigungen und damit den Komfort einer Strecke beschreibt. Dieser Wert kann in ähnlicher Weise wie der Fahrzeit-Mittelwert durch das eigene Fahrzeug oder durch andere Fahrzeuge (FCD, Car2Car) ermittelt werden.
● Ein Zeitverhalten einer Ampelschaltung auf einem für die zu bestimmende Route in Frage kommenden Routenabschnitt. Unter dem Zeitverhalten der Ampelschaltung ist zum einen die Information zu verstehen, wann eine Ampel auf einem bestimmten Routenabschnitt überhaupt in Betrieb ist. Zum anderen kann aus dem Zeitverhalten der auf einem Routenabschnitt befindlichen Ampeln abgeleitet werden, mit welcher Durchschnittsgeschwindigkeit der Routenabschnitt voraussichtlich mit möglichst wenigen Stopps aufgrund von roten Ampeln durchfahren werden kann und mit wie vielen Stopps aufgrund von roten Ampeln abhängig von der Fahrgeschwindigkeit des Kraftfahrzeugs zu rechnen ist.
● Kosten einer Benutzung eines Abschnitts der zu bestimmenden Route. Diese Kosten umfassen zum einen Straßenbenutzungsgebühren, wie z.B. eine in bestimmten Ländern zu zahlende Maut, welche auch von der Fahrzeit, zu welcher der entsprechende Routenabschnitt voraussichtlich befahren werden wird, abhängig sein können, und zum anderen Treibstoffkosten, welche zur Bewältigung des entsprechenden Abschnitts anfallen.
● Kosten für die Verkehrsinformation sowie Umfeld-Daten (z.B. Wetter-Information).
● Verschleiß des Kraftfahrzeugs. Je höher der Verschleiß des Kraftfahrzeugs auf der Fahrt einer bestimmten Route ist, desto höher sind die für die Fahrt über die Route einzukalkulierenden Betriebskosten. Der Verschleiß des Kraftfahrzeugs hängt dabei zum einen von der gewählten Route ab (beispielsweise verschleißen bei einer Route mit vielen Stopps die Bremsen und die Reifen des Kraftfahrzeugs mehr als bei einer Route mit weniger Stopps), aber auch von der aufgrund der Fahrstrategie gewählten Fahrweise, da beispielsweise eine aggressivere Fahrweise die Fahrtdauer senken kann, aber in der Regel den Verschleiß der Bremsen, der Reifen und des Getriebes erhöht.
● Gewicht des Kraftfahrzeugs einschließlich Beladung. Je höher dieses Gewicht des Kraftfahrzeugs ist, desto höher sind die Betriebskosten bei einer Route mit vielen Höhenmetern oder bei einer aggressiven Fahrweise mit häufigen Brems- und Beschleunigungsvorgängen.
● Energieverbrauch einer Vorrichtung des Kraftfahrzeugs, welche nicht dem Antrieb des Kraftfahrzeugs zugeordnet wird. Derartige Vorrichtungen des Kraftfahrzeugs umfassen eine Lichtquelle des Kraftfahrzeugs, eine Klimaanlage des Kraftfahrzeugs und eine beheizbare Heckscheibe. Beispielsweise muss bei einer Fahrt auf einem durch einen Tunnel führenden Routenabschnitt das Licht des Kraftfahrzeuges eingeschaltet werden, was zu einem erhöhten Energieverbrauch und damit zu erhöhten Betriebskosten führt. Bei einem Routenabschnitt, welcher in der Regel der prallen Sonne ausgesetzt ist, muss beispielsweise mit einem erhöhten Strombedarf für die Klimaanlage gerechnet werden, was ebenso die Betriebskosten zur Bewältigung dieses Routenabschnitt erhöht. Auch eine Abwägung, ob zuerst eine Abwärme des Motors zur Beheizung des Innenraums genutzt wird oder ob der Motor zuerst auf Betriebstemperatur gebracht wird, kann erfindungsgemäß abhängig von den zur Bestimmung der Fahrstrategie vorgegebenen Parametern (hauptsächlich Komfort und Betriebskosten) vorgenommen werden.
● Sollenergiemenge im Energiespeicher des Hybridantriebs des Kraftfahrzeugs. Aufgrund dieser Information kann die Route derart ausgelegt werden, dass eine Energie im Energiespeicher des Hybridantriebs möglichst selten verbraucht wird, so dass der Antrieb des Kraftfahrzeugs möglichst häufig elektrisch erfolgt.
● Routenabschnitte mit Bahnschranken. Bahnschranken führen häufig zu einer unfreiwilligen Unterbrechung der Fahrt, was zumindest bezüglich des Verbrauchs bzw. der Betriebskosten aber auch hinsichtlich eines Sicherheitsaspekts negativ ist.
● Die Straßenqualität der Routenabschnitte. Eine schlechte Straßenqualität ist bezüglich der zu fahrenden Geschwindigkeit und damit bezüglich der Fahrtdauer negativ, verschleißt das Kraftfahrzeug überdurchschnittlich, beeinflusst aber auch den Komfort (zumindest für nicht sportliche Fahrer) und Sicherheitsaspekte negativ.
● Geschwindigkeitsbegrenzungen allgemeiner Art. Geschwindigkeitsbegrenzungen beschränken insbesondere die Fahrtdauer.
● Geschwindigkeitsbegrenzungen, welche abhängig von Wettergegebenheiten (z.B. Regen, Schnee, Glätte) sind. Abhängig von der aktuellen Wettersituation führen diese Geschwindigkeitsbegrenzungen zu einer längeren Fahrtdauer. Dazu gehören auch Warnungen vor einem Seitenwind auf Brücken oder beim Überholen von LKWs, was letztendlich auch zu einer geringeren Durchschnittsgeschwindigkeit und damit zu einer längeren Fahrtdauer führt. Abhängig von der Wettersituation wird auch ein HCA eingestellt, mit welchem Auswirkungen eines Seitenwinds verringert werden können.
● Individuelle Benutzungsgenehmigungen von bestimmten Routenabschnitten. Indem individuelle Genehmigung zur Benutzung von bestimmten Routenabschnitten (z.B. Forstwege für einen Förster) bei der Bestimmung der optimalen Fahrstrategie oder Fahrroute berücksichtigt werden, kann vorteilhafterweise eine Route gewählt werden, welche zu einer besseren Fahrstrategie führt, als wenn Routenabschnitte, die nur mit einer individuellen Genehmigung benutzt werden dürfen, nicht berücksichtigt werden.
**●** Berücksichtigung maximaler Durchfahrtshöhen. Gerade für LKWs ist die Berücksichtigung von maximalen Durchfahrtshöhen von großer Wichtigkeit, da sonst Routenabschnitte gewählt werden könnten, welche von dem LKW nicht benutzt werden können, was dann zu einem Umweg und damit zu einer suboptimalen Fahrstrategie führt.
● Routenabschnitte mit Schneekettenpflicht (abhängig vom Wetter). Die Berücksichtigung der Information, ob ein bestimmter Routenabschnitt nur mit Schneeketten zu befahren ist, ist insbesondere für den Komfort und die Sicherheit aber auch für die Fahrtdauer von entscheidender Bedeutung, da vor einer Benutzung eines entsprechenden Routenabschnitts die Schneeketten angelegt und nach der Benutzung die Schneeketten abgenommen werden müssen, was je nach Geschicklichkeit des Fahrers zu einem entsprechenden Zeitverlust bzw. zu einer Verlängerung der Fahrtdauer führt.
● Routenabschnitt, welche nur mit einem geländegängigen Fahrzeug zu bewältigen sind. Die Berücksichtigung von solchen Routenabschnitten ist für Fahrer von geländegängigen Fahrzeugen vorteilhaft, da zum einen die Möglichkeiten des erfindungsgemäßen Verfahrens erweitert werden und zum anderen für sportliche Fahrer der Komfort und auch die Attraktivität erhöht werden kann.
● Berücksichtigung des Verschleißes eines Hybridpuffers durch Ladezyklen. Dabei wird bei der Bestimmung der optimalen Fahrstrategie berücksichtigt, dass jeder Ladezyklus des Hybridpuffers diesen verschleißt, was schließlich zu einer Wartungsmaßnahme oder im schlimmsten Fall zu einem Austausch des Hybridpuffers führt.
● Standorte von preiswerten Tankstellen. Durch die Berücksichtigung der Standorte von preiswerten Tankstellen können die Betriebskosten zur Bewältigung der gewählten Route gesenkt werden.
● Vorgabe einer maximalen Fahrzeit. Unter der maximalen Fahrzeit wird hier die Fahrzeit verstanden, welche von dem Kraftfahrzeug auf der zu bestimmenden Fahrroute nicht überschritten werden darf. Anders ausgedrückt darf die von dem erfindungsgemäßen Verfahren optimierte möglichst geringe Fahrdauer nicht größer als die maximale Fahrzeit sein.
● Gesetzliche Vorschriften. Unter gesetzlichen Vorschriften sind Vorschriften zu verstehen, deren Übertretung per Gesetz verfolgt wird. Dazu zählen z.B. Geschwindigkeitsbegrenzungen und Überholverbote. Enthält die Fahrroute ein Teilstück, auf welchem eine Geschwindigkeitsbegrenzung herrscht, gibt beispielsweise diese Geschwindigkeitsbegrenzung automatisch die maximale Geschwindigkeit vor, welche das Kraftfahrzeug auf diesem Teilstück fahren kann.
● Einen Ausschluss von vorgebbaren Routenabschnitten. Beispielsweise der Fahrer des Kraftfahrzeugs kann Routen oder Teilstücke vorgeben, welche von dem Verfahren keinesfalls in die Fahrroute aufgenommen werden. Anders ausgedrückt umfasst die von dem Verfahren bestimmte Fahrroute keinesfalls diese vorgegebenen Routenabschnitte.
● Eine Mindestgeschwindigkeit des Kraftfahrzeugs. Eine Geschwindigkeit des Kraftfahrzeugs, welche im Normalfall auf keinem Teilstück der Fahrroute unterschritten werden darf. Wenn das erfindungsgemäße Verfahren erkennt, dass ein bestimmtes Teilstück nur eine Geschwindigkeit erlaubt, welche unterhalb dieser Mindestgeschwindigkeit liegt, wird dieses bestimmte Teilstück nicht Bestandteil der Fahrroute. Damit kann beispielsweise ausgeschlossen werden, dass die Fahrroute durch Tempo-30-Zonen verläuft.
● Eine im Kraftfahrzeug vorhandene Energiemenge. Durch eine genaue Kenntnis der im Kraftfahrzeug vorhandene Energiemenge, welche beispielsweise automatisch von dem Kraftfahrzeug ermittelt wird, kann zum einen das Gesamtgewicht des Kraftfahrzeugs genauer bestimmt werden. Zum anderen lässt sich durch die Kenntnis dieser Energiemenge bestimmen, ob gegebenenfalls ein oder mehrere Tankstopps bei der Bestimmung der optimalen Fahrroute einkalkuliert werden müssen.
**●** Verkehrsfluss-Information. Der Verkehrsfluss gibt an, mit welcher Geschwindigkeit sich der Verkehr über ein Teilstück einer Fahrroute bewegt. Der Verkehrsfluss wird beispielsweise durch die Verkehrsdichte (zähfließender Verkehr, Stau) bestimmt. Zur Bestimmung der Fahrroute kann nun, beispielsweise durch Auswertung von früheren Verkehrsinformationen oder von prognostizierten Verkehrsinformationen, ermittelt werden, wie hoch der Verkehrsfluss für ein bestimmtes Teilstück der Fahrroute sein wird, wobei der derart bestimmte Verkehrsfluss ein Maß einer Geschwindigkeit ist, mit welcher das bestimmte Teilstück passiert werden kann. Dabei kann die Verkehrsfluss-Information Informationen über eine tageszeitabhängige Ampelrotphaseninformation und/oder Informationen über eine tageszeitabhängige Stauwahrscheinlichkeit umfassen. Über eine tageszeitabhängige Ampelrotphaseninformation für ein bestimmtes Teilstück kann eine Start-Stopp-Häufigkeit für dieses Teilstück abhängig von der Tageszeit bestimmt werden. Dabei ist zu berücksichtigen, dass eine höhere Start-Stopp-Häufigkeit meist zu einer geringeren Geschwindigkeit führt, mit welcher dieses Teilstück zu bewältigen ist.

Natürlich kann erfindungsgemäß auch eine individuelle Fahrweise des Fahrers (z.B. sportlich oder mit jeweils einer Pause nach einer vorbestimmten Fahrtdauer, usw.) bei der Bestimmung der optimalen Fahrstrategie berücksichtigt werden. Dabei kann diese individuelle Fahrweise des Fahrers entweder von dem Fahrer vorgegeben werden oder diese individuelle Fahrweise wird durch das erfindungsgemäße Verfahren durch eine Analyse von vorher durchgeführten Fahrten erlernt.

Vorteilhafterweise werden einige der Informationsparameter, welche vorab aufgeführt worden sind, durch Sensoren des Kraftfahrzeugs selbst erfasst. Beispielsweise ist es relativ einfach, die Sollenergiemenge im Energiespeicher des Hybridantriebs durch einen Sensor des Kraftfahrzeugs zu erfassen. Auch das Gewicht des Kraftfahrzeugs oder der Verschleiß des Kraftfahrzeugs lassen sich durch Sensoren innerhalb des Kraftfahrzeugs erfassen. Der aktuelle Fahrkomfort (z.B. die Straßenbeschaffenheit) kann z.B. durch Nutzung der zur Fahrdynamikregelung im Fahrzeug vorhandenen Beschleunigungssensoren ermittelt werden. Es wurde bereits vorab beschrieben, dass der Kraftstoffverbrauchs-Mittelwert eines bestimmten Routenabschnitt und ein Fahrzeit-Mittelwert eines bestimmten Routenabschnitt von dem Kraftfahrzeug ermittelt werden kann, was selbstverständlich auch durch entsprechende ausgestaltete Sensoren des Kraftfahrzeugs bewerkstelligt wird. Ein Zusammenwirken von mehreren Sensoren zur Ermittlung bestimmter Informationsparameter wird dabei auch als Sensordatenfusion bezeichnet. Z.B. können zur Ermittlung des Verschleißes des Kraftfahrzeugs die Sensordaten eines Sensors, welcher einen Bremsverschleiß bestimmt, mit den Sensordaten eines Sensors, welcher einen Getriebeverschleiß bestimmt, zusammenwirken.

Diese durch Sensoren des Kraftfahrzeugs erfassten Informationsparameter (FCD), insbesondere der Kraftstoffverbrauchs-Mittelwert und der Fahrzeit-Mittelwert eines bestimmten Routenabschnitts, können auch an andere Kraftfahrzeuge entweder direkt (Car2Car-Kommuniukation) oder indirekt über einen zentralen Server weitergegeben werden, damit diese ihrerseits ihre Fahrstrategie optimieren können.

Obwohl das aktuelle Fahrverhalten oder die aktuelle Fahrweise des Kraftfahrzeugs von der optimierten Fahrstrategie bestimmt wird, ist es erfindungsgemäß möglich, dass ein Fahrer des Kraftfahrzeugs das aktuelle Fahrverhalten jederzeit durch manuelle Eingriffe entsprechend verändert. Beispielsweise ist es möglich, dass der Fahrer eine gemäß der Fahrstrategie vorgegebene Geschwindigkeit überschreitet, um ein Fahrzeug zu überholen. Nach einem solchen Vorgang, wie beispielsweise einem Überholvorgang, gibt die Fahrstrategie wieder die Fahrweise des Fahrzeugs vor. Das heißt, dass durch einen manuellen Eingriff die Fahrstrategie nur temporär, nämlich solange der manuelle Eingriff dauert, außer Kraft gesetzt wird.

Erfindungsgemäß kann mindestens eine der folgenden Bedingungen zur Bestimmung der Fahrroute berücksichtigt werden:
● Start-Stopp-Häufigkeit
   Unter der Start-Stopp-Häufigkeit ist die Häufigkeit zu verstehen, mit welcher das Kraftfahrzeug auf einem bestimmten Teilstück anhalten und folglich wieder anfahren muss. Verfügt das Kraftfahrzeug über eine Start-Stopp-Automatik kann bei der Bestimmung der optimalen Fahrroute vorausgesetzt werden, dass diese Start-Stopp-Automatik bei einem Halt und folgendem wieder Anfahren optimal genutzt wird.
● Notwendige Tankstopps
   In Abhängigkeit von dem Energieverbrauch des Kraftfahrzeugs für eine bestimmte Fahrroute steigt die Anzahl der notwendigen Tankstopps. Bezüglich eines Tankstopps ist einzuplanen, dass dieser Tankstopp nur an einer Tankstelle eingelegt werden kann, welche die für das Kraftfahrzeug richtige Energiesorte besitzt, und dass diese Tankstelle aufgesucht werden muss, bevor die in dem Kraftfahrzeug vorhandene Energiemenge, z. B. der Brennstoff, vollständig aufgebraucht ist. Daher muss die Fahrroute gegebenenfalls derart umgeplant werden, dass eine derartige Tankstelle auf der Fahrroute liegt und zur richtigen Zeit aufgesucht werden kann.
● Auszunutzende Gefälle
   Bei einem Teilstück mit einem Gefälle ist ein Energieverbrauch zur Bewältigung dieses Teilstücks durch das Kraftfahrzeug geringer als bei einem vergleichbaren Teilstück ohne Gefälle. Dies kann erfindungsgemäß zur Bestimmung der optimalen Fahrroute berücksichtigt werden, indem beispielsweise der Schleppbetrieb aber auch ein Auslaufen des Kraftfahrzeugs ausgenutzt wird. Dabei ist im Schleppbetrieb bei einem Verbrennungsmotor der Motor über die Kupplung mit den Rädern verbunden, erhält aber keinen Brennstoff (Energieverbrauch des Kraftfahrzeugs gleich Null), d.h. der Motor wird über die rollenden Räder angetrieben.
● Zu vermeidende Steigungen
   Bei einem Teilstück mit einer Steigung ist ein Energieverbrauch zur Bewältigung dieses Teilstücks durch das Kraftfahrzeug höher als bei einem vergleichbaren Teilstück ohne Steigung. Dies kann erfindungsgemäß zur Bestimmung der optimalen Fahrroute berücksichtigt werden, beispielsweise indem Teilstücke mit einer Steigung, welche oberhalb eines Grenzwertes liegt, nicht in die optimale Fahrroute aufgenommen werden.

Unter einem vorausschauenden Fahren wird erfindungsgemäß auch verstanden, dass bevorstehende Kurven, Geschwindigkeitsbeschränkungen oder Rotphasen derart berücksichtigt werden, dass abhängig von dem Gewicht des Parameters Betriebskosten möglichst wenig Energie beim Bremsen vergeudet wird, um die Kurven zu durchfahren, die Geschwindigkeit des Kraftfahrzeugs an die Geschwindigkeitsbegrenzung anzupassen bzw. das Kraftfahrzeug an der roten Ampel anzuhalten.

Vorteilhafter Weise kann beispielsweise der Fahrer des Kraftfahrzeugs über ein auf der optimalen Fahrroute erreichbares Energieverbrauchsziel, d.h. eine Energiemenge oder eine Energiemenge pro beispielsweise 100 km, welche zur Bewältigung der optimalen Fahrroute voraussichtlich benötigt wird, informiert werden. Darüber hinaus kann auch über eine Abweichung von diesem Energieverbrauchsziel informiert werden.

Des Weiteren kann (der Fahrer) über mindestens eine der folgenden Maßnahmen informiert werden, welche zu einer Verringerung des aktuellen Energieverbrauchs des Kraftfahrzeugs führen würden.
● Eine Änderung der Geschwindigkeit des Kraftfahrzeugs
   Unter anderem abhängig von dem spezifischen Luftwiderstandwert des Kraftfahrzeugs und des Motors des Kraftfahrzeugs besitzt das Kraftfahrzeug eine hinsichtlich minimalem Energieverbrauch optimale Geschwindigkeit. Weicht die aktuelle Geschwindigkeit des Kraftfahrzeugs von dieser optimalen Geschwindigkeit ab, wird beispielsweise der Fahrer darüber informiert.
● Eine Änderung einer Flussmenge einer einem Motor des Kraftfahrzeugs aktuell zur Energieerzeugung zugeführten Menge
   Heutige Kraftfahrzeuge werden meist mit Brennstoff, aber auch mit Gas (Flüssiggas oder Wasserstoff) oder Elektrizität betrieben, wobei auch Mischformen, Stichwort Hybridantrieb, immer mehr im Kommen sind. Die dem Motor des Kraftfahrzeugs aktuell zur Energieerzeugung zugeführte Menge kann also Brennstoff, Gas oder Elektrizität sein. Somit ist unter der Änderung der Flussmenge der dem Motor zugeführten Menge eine Änderung eines Flusses zu verstehen, mit welcher Brennstoff, Gas oder Elektrizität dem Motor zufließt bzw. zugeführt wird. Bei den heutigen Kraftfahrzeugen steuert der Fahrer die Änderung dieser Flussmenge mit einem Fußpedal, welches meist als Gaspedal bezeichnet wird. Eine Erhöhung dieser Flussmenge bewirkt in der Regel eine Beschleunigung des Kraftfahrzeugs, während eine Verringerung dieser Flussmenge in der Regel bewirkt, dass sich die Geschwindigkeit des Kraftfahrzeugs verringert.
● Eine Änderung des Ganges, in welchem das Kraftfahrzeug betrieben wird
   Zumindest jeder Verbrennungsmotor eines Kraftfahrzeugs besitzt einen hinsichtlich Energieverbrauch optimalen Drehzahlbereich. Erkennt das erfindungsgemäße Verfahren, dass eine Änderung des Ganges, in welchem das Kraftfahrzeug momentan betrieben wird, dazu führen würde, näher an diesen optimalen Drehzahlbereich heranzukommen oder in diesen optimalen Drehzahlbereich zu kommen, so ist es vorteilhaft eine entsprechende Information auszugeben.
● Eine Änderung der Route der optimalen Fahrstrategie
   Aufgrund sich ändernder Randbedingungen, beispielsweise aufgrund geänderter Verkehrsinformationen, kann das erfindungsgemäße Verfahren erkennen, dass sich die Route zur Erreichung der optimalen Fahrstrategie geändert hat. Dies wird vorteilhafterweise beispielsweise dem Fahrer des Kraftfahrzeugs angezeigt. Dabei kann erfindungsgemäß eine Häufigkeit, mit welcher die optimale Fahrroute bzw. der Teil der optimalen Fahrroute von dem aktuellen Standort des Kraftfahrzeugs bis zu dem Endpunkt der optimalen Fahrroute neu berechnet wird, beschränkt werden.

Im Rahmen der vorliegenden Erfindung wird auch eine Vorrichtung zur Bestimmung einer optimalen Fahrstrategie für eine Fahrt von einem Startpunkt zu einem Zielpunkt bereitgestellt. Dabei bestimmt die Vorrichtung eine Route von dem Startpunkt zu dem Zielpunkt derart, dass die Fahrstrategie abhängig von mindestens zwei Parametern, welche insbesondere stufenlos gewichtet werden können, optimiert wird. Dabei werden diese Parameter aus der Attraktivität der Route, der Fahrtdauer, des Komforts, der Betriebskosten und der Sicherheit ausgewählt.

Die Vorteile dieser erfindungsgemäßen Vorrichtung entsprechen im Wesentlichen den bereits vorab diskutierten Vorteilen des erfindungsgemäßen Verfahrens, weshalb sie hier nicht wiederholt werden.

Im Rahmen der vorliegenden Erfindung wird auch eine Kraftfahrzeug-Anzeige bereitgestellt, welche eine Anzeige, die eine Abweichung von einem bestimmten Optimum eines Betriebszustand des Kraftfahrzeugs darstellt, und eine Anzeige, die eine Maßnahme zur Verbesserung des Betriebszustandes darstellt, kombiniert.

Mit der erfindungsgemäßen Anzeige wird beispielsweise ein Fahrer des Kraftfahrzeugs also nicht nur darüber informiert, ob und wie viel der aktuelle Betriebszustand des Kraftfahrzeugs von einem vorab berechneten oder bestimmten Optimum abweicht, sondern der Fahrer wird gleichzeitig darüber informiert, mit welcher Maßnahme er den Betriebszustand verbessern kann.

Der Betriebszustand des Kraftfahrzeugs kann dabei ein Energieverbrauchsbetriebszustand des Kraftfahrzeugs sein. Das heißt, es kann ein Betriebszustand sein, welcher angibt, wie viel Energie das Kraftfahrzeug zum Fahren aktuell benötigt. Somit wäre das bestimmte Optimum dieses Energieverbrauchsbetriebszustandes eine Art optimaler Energieverbrauch, welcher unter anderem von dem Motor des Kraftfahrzeugs, einer für eine Fahrroute vorgegebenen maximalen Fahrtzeit oder von dem Luftwiderstand des Kraftfahrzeugs abhängt.

Bei einer bevorzugten erfindungsgemäßen Ausführungsform der Anzeige kann es sich bei dem Optimum des Energieverbrauchsbetriebszustand um eine optimale Energiemenge handeln, welche laut einer vorab durchgeführten erfindungsgemäßen Bestimmung einer hinsichtlich Fahrzeit und Energieverbrauch optimalen Fahrroute bis zum aktuellen Aufenthaltsort des Kraftfahrzeugs benötigt werden sollte. Die Abweichung von diesem Optimum wäre dann gleich einer Differenz dieser optimalen Energiemenge und einer tatsächlichen Energiemenge, welche das Kraftfahrzeug tatsächlich auf der optimalen Fahrroute bis zum aktuellen Aufenthaltsort verbraucht hat.

Die Maßnahme zur Verbesserung des Betriebszustandes kann eine positive oder negative vorgeschlagene Änderung eines Betriebsparameters des Kraftfahrzeugs sein. Dabei soll eine positive bzw. negative Änderung zu einer Erhöhung bzw. Verringerung dieses Betriebsparameters führen. Wenn der Betriebsparameter zum Beispiel eine Flussmenge einer dem Motor des Kraftfahrzeugs zur Erzeugung von Energie zuzuführenden Menge ist, bedeutet eine positive bzw. negative vorgeschlagene Änderung, dass die Flussmenge erhöht bzw. verringert werden soll, um den optimalen Betriebszustand des Kraftfahrzeugs zu erreichen.

Im Rahmen der vorliegenden Erfindung wird auch ein Kraftfahrzeug bereitgestellt, welches eine vorab beschriebene Vorrichtung für ein Kraftfahrzeug zur Bestimmung einer optimalen Fahrstrategie des Kraftfahrzeugs und eine ebenfalls vorab beschriebene Kraftfahrzeug-Anzeige, welche eine Abweichung von einem optimalen Betriebszustand des Kraftfahrzeugs und eine Maßnahme zur Verbesserung des Betriebszustandes kombiniert darstellt, umfasst.

Die vorliegende Erfindung eignet sich vorzugsweise für einen Einsatz in einem Kraftfahrzeug jeglicher Antriebsart, um für dieses Kraftfahrzeug eine optimale Fahrstrategie für eine Fahrt von einem Startpunkt zu einem Zielpunkt zu bestimmen, wobei eine Präferenz des Fahrers berücksichtigt wird. Selbstverständlich ist die vorliegende Erfindung jedoch nicht auf diesen bevorzugten Anwendungsbereich beschränkt, sondern kann auch außerhalb eines Kraftfahrzeugs eingesetzt werden, um z.B. an einem Computer für irgendein vorzugebendes Kraftfahrzeug die optimale Fahrstrategie zu ermitteln. Dabei werden unter einem Kraftfahrzeug alle Fahrzeuge verstanden, welche mit einem Antrieb versehen sind, wie z.B. Motorräder, Lastwagen und Autos.

Im Folgenden werden erfindungsgemäße Ausführungsformen mit Bezug zu den Figuren erläutert.

Fig. 1 stellt eine erfindungsgemäße Ausführungsform einer Vorrichtung zur Bestimmung einer optimalen Fahrstrategie dar.

Fig. 2 stellt eine Gewichtung von Parametern abhängig von einem Wunsch eines Fahrers eines Kraftfahrzeugs dar.

Fig. 3 zeigt eine Teilansicht des Inneren eines erfindungsgemäßen Kraftfahrzeugs.

Fig. 4 stellt eine erfindungsgemäße Anzeige dar.

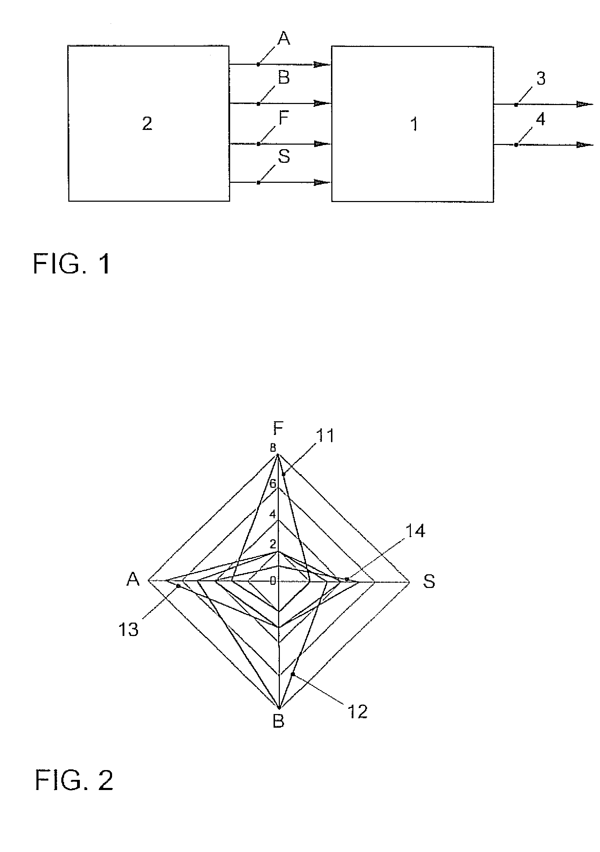

In Fig. 1 ist eine erfindungsgemäße Vorrichtung 1 zur Bestimmung einer Fahrstrategie dargestellt. Dabei optimiert die Vorrichtung 1 die Fahrstrategie in Abhängigkeit von vier Parametern A, B, F, S, nämlich einer Attraktivität A einer von der Fahrstrategie zu bestimmenden Route, Betriebskosten B (welche sowohl Kosten zur Ermittlung der Fahrstrategie notwendiger Informationen als auch Kosten zur Bewältigung der Route durch das Kraftfahrzeug, unter anderem Kosten für den Treibstoff und Mautgebühren, umfassen), einer Fahrtdauer F und einer Sicherheit S bei der Fahrt über die Route. Dabei kann beispielsweise der Fahrer des Kraftfahrzeugs die Parameter A, B, F, S stufenlos gewichten, so dass die Vorrichtung 1 beispielsweise eine sehr attraktive oder aber eine nahezu ausschließlich hinsichtlich der Betriebskosten optimierte Fahrstrategie bestimmen kann.

Die Ausgaben 3, 4 der Vorrichtung 1 umfassen zum einen die Route 3, welche eine hinsichtlich der vier vorgegebenen Parameter A, B, F, S optimierte Verbindung zwischen einem Startpunkt und einem Endpunkt ist. Zum anderen umfassen die Ausgaben der Vorrichtung 1 eine aktuelle Fahrzeugeinstellung 4 oder eine aktuelle Fahrweise des Kraftfahrzeugs. Mit anderen Worten gibt die Vorrichtung 1 abhängig von der bestimmten Fahrstrategie zu jedem Zeitpunkt vor, wie das Kraftfahrzeug zu fahren ist. Diese Fahrweise umfasst dabei vor Allem die aktuelle Geschwindigkeit des Kraftfahrzeugs.

In Fig. 2 sind vier Beispiele für die Gewichtung der vier Parameter A, B, F, S abhängig von einem vorgegebenen Wunsch 11-14 des Fahrers des Kraftfahrzeugs dargestellt.

Die mit einem Bezugszeichen 11 gekennzeichnete Parametereinstellung zeigt eine hinsichtlich der Fahrtdauer F optimierte Parametereinstellung 11, welche von einem Fahrer des Kraftfahrzeugs beispielsweise bei einer Fahrt zur Arbeit vorgegeben wird. Dabei ist der Parameter Attraktivität A mit 3, der Parameter Betriebskosten B mit 2, der Parameter Fahrtdauer F mit 8 und der Parameter Sicherheit S mit 2 gewichtet. Die Fahrstrategie wird also hauptsächlich hinsichtlich der Fahrtdauer F optimiert, wobei allerdings die anderen Parameter A, B, S auch, wenn auch mit einem geringeren Gewicht, berücksichtigt werden müssen.

Die mit einem Bezugszeichen 12 gekennzeichnete Parametereinstellung betrifft eine hinsichtlich der Betriebskosten B optimierte Parametereinstellung 12, welche von dem Fahrer des Kraftfahrzeugs beispielsweise führt die Fahrt von der Arbeit zurück nach Hause vorgenommen werden könnte. Dabei ist der Parameter Attraktivität A mit 5, der Parameter Betriebskosten B mit 8, der Parameter Fahrtdauer F mit 2 und der Parameter Sicherheit S mit 3 gewichtet. Die Fahrstrategie wird dabei hauptsächlich hinsichtlich der Betriebskosten B optimiert, wobei auch die anderen Parameter A, F, S, insbesondere die Attraktivität A, berücksichtigt werden.

Eine hauptsächlich bezüglich der Attraktivität A gewichtete Parametereinstellung ist mit einem Bezugszeichen 13 gekennzeichnet, welche beispielsweise bei einem Familienausflug, wobei eine möglichst schöne bzw. attraktive Strecke angestrebt wird, eingestellt werden könnte. Dabei ist die Attraktivität A mit 7, die Betriebskosten B mit 3, die Fahrtdauer F mit 2 und die Sicherheit S mit 4 gewichtet. Neben der Attraktivität A wird die Fahrstrategie also hauptsächlich hinsichtlich der Sicherheit S optimiert.

Schließlich ist mit einem Bezugszeichen 14 eine hinsichtlich der Sicherheit S eingestellte Parametereinstellung 14 dargestellt, welche von dem Fahrer des Kraftfahrzeugs beispielsweise für eine Fahrt in der Nacht, wenn sich der Fahrer allein im Kraftfahrzeug befindet, eingestellt werden könnte. Dabei ist die Attraktivität A mit 4, die Betriebskosten B mit 3, die Fahrtdauer F mit 1 und die Sicherheit S mit 5 eingestellt.

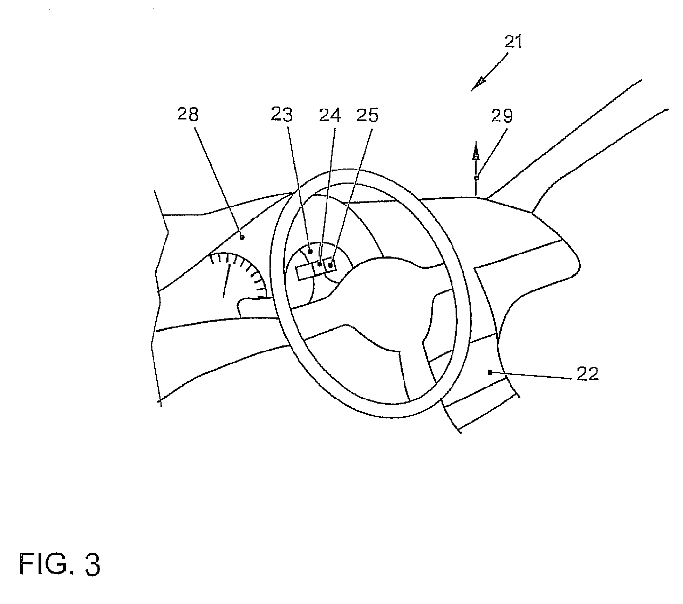

In Fig. 3 ist das Innere eines Kraftfahrzeugs 21 schematisch teilweise dargestellt. Das Kraftfahrzeug 21 umfasst einen Bordcomputer 22 und ein Armaturenbrett 28. In dem Bordcomputer 22 ist ein erfindungsgemäßes Verfahren zur Bestimmung einer optimalen Fahrstrategie des Kraftfahrzeugs 21 implementiert.

Um das erfindungsgemäße Verfahren beispielhaft zu erläutern, sei darauf hingewiesen, dass gerade für Fahrten auf einer Autobahn gilt, dass die Fahrzeit auf Kosten des Energieverbrauchs optimiert werden kann. Da auf einer Autobahn im Vergleich zu anderen Straßentypen, wie z.B. einer Landstraße, sehr schnell gefahren werden kann, wird häufig ein Autobahnabschnitt in die zu berechnende optimale Route aufgenommen, obwohl die zwei von dem Autobahnabschnitt verbundenen Punkte auch über einen kürzeren Landstraßenabschnitt verbunden sind. Der Grund dafür ist einfach, dass die Fahrzeit auf dem Autobahnabschnitt auch geringer als die Fahrt auf dem kürzeren Landstraßenabschnitt ist, da das Kraftfahrzeug 21 auf dem Autobahnabschnitt schneller fahren kann. Bei einer Optimierung hinsichtlich des Energieverbrauchs schlägt der längere Autobahnabschnitt aber negativ zu Buche, da für seine Bewältigung eine größere Energiemenge benötigt wird, als für den kürzeren Landstraßenabschnitt. Je nach dem Verfahren vorgebbaren Randbedingungen und anderen Informationen wird das erfindungsgemäße Verfahren nun entscheiden, den Autobahnabschnitt oder den Landstraßenabschnitt bezüglich der optimalen Fahrtroute in Erwägung zu ziehen.

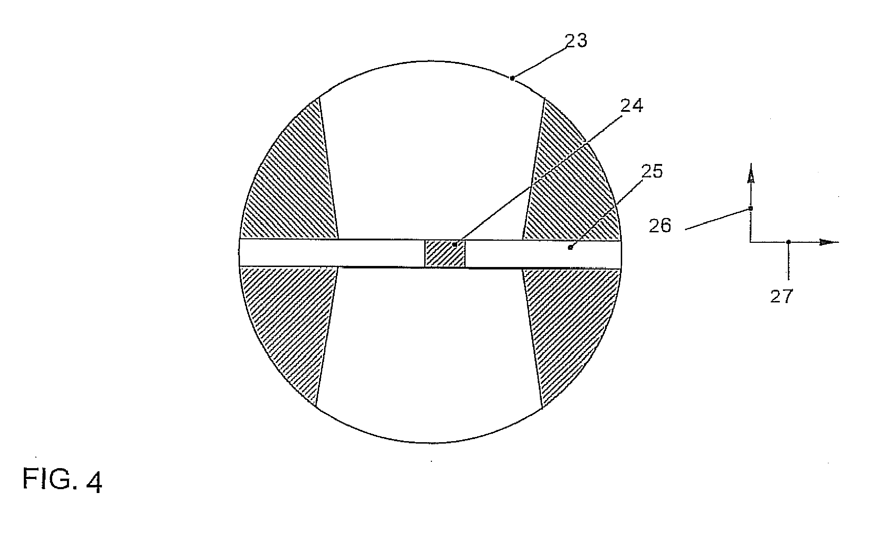

Das in Fig. 3 dargestellte Armaturenbrett 28 umfasst wiederum eine erfindungsgemäße Anzeige 23, welche in Fig. 4 näher dargestellt ist. Die Anzeige 23 weist einen waagerechten in Richtung einer X-Achse 27 verlaufenden Balken 25 auf, welcher sich analog eines künstlichen Horizontes bei einem Flugzeug nach oben oder unten in Richtung einer Y-Achse 26, welche senkrecht zur X-Achse 27 steht, verschiebt. Dabei ist eine Höhenabweichung des Balkens von der Mitte der Anzeige proportional zu der Abweichung von einem optimalen, errechneten Betriebszustand des Kraftfahrzeugs 21, welcher in diesem Fall einem von dem Bordcomputer 22 errechneten Energieverbrauch entspricht, welchen das Kraftfahrzeug 21 an dem aktuellen Aufenthaltsort des Kraftfahrzeugs 21 verbrauchen bzw. verbraucht haben sollte. Die Anzeige 23 zeigt also über die Höhenabweichung des Balkens von der Mitte der Anzeige 23 an, um wie viel der aktuelle Energieverbrauch von dem errechneten Energieverbrauch abweicht. Die Höhenabweichung des Balkens 25 bzw. die Y-Achse 26 verläuft dabei im Wesentlichen parallel zu einem Normalenvektor 29 des Kraftfahrzeugs 21. Dabei bedeutet eine Höhenabweichung nach oben, dass der aktuelle Energieverbrauch unterhalb des errechneten Energieverbrauchs liegt, was beispielsweise der Fall sein kann, wenn sich bei der Berechnung des errechneten Energieverbrauchs zugrunde liegende Randbedingungen (z.B. Verkehrsinformationen) positiv verändert haben. Eine Höhenabweichung nach unten signalisiert dem Fahrer, dass der aktuelle Energieverbrauch oberhalb des errechneten Energieverbrauchs liegt.

Innerhalb des Balkens 25 liefert ein Abschnitt 24 eine Information über eine zur Verbesserung des aktuellen Energieverbrauchs führende Maßnahme. Ein sich von der Mitte des Balkens 25 nach rechts erstreckender Abschnitt 24 signalisiert dem Fahrer des Kraftfahrzeugs 21, dass eine Beschleunigung des Kraftfahrzeugs 21 zu einem niedrigeren aktuellen Energieverbrauch führen würde. Dabei ist der Abschnitt 24 um so länger, je stärker das Kraftfahrzeug 21 beschleunigt werden müsste. Wenn die Beschleunigung des Kraftfahrzeugs 21 mit einem Hochschalten einhergehen soll, wird dies durch eine Einfärbung des Abschnitts 24 kenntlich gemacht. In ähnlicher Weise signalisiert ein sich von der Mitte des Balkens 25 nach links erstreckender Abschnitt 24 dem Fahrer des Kraftfahrzeugs 21, dass ein Absenken der Geschwindigkeit des Kraftfahrzeugs 21 zu einem niedrigeren aktuellen Energieverbrauch führen würde. Dabei ist wiederum der Abschnitt 24 umso länger, je stärker die Geschwindigkeit des Kraftfahrzeugs 21 abgesenkt werden müsste. Wenn das Absenken der Geschwindigkeit des Kraftfahrzeugs 21 mit einem Runterschalten einhergehen soll, wird dies ebenfalls durch eine spezielle Einfärbung des Abschnitts 24 kenntlich gemacht.

Alternativ oder zusätzlich kann die Information über die zur Verbesserung des aktuellen Energieverbrauchs führende Maßnahme auch akustisch erfolgen.

Bei einer speziellen Ausführungsform der erfindungsgemäßen Anzeige 23 kann die Anzeige 23 derart ausgestaltet sein, dass der Abschnitt 24 eine Länge aufweist, welche ein Vielfaches einem Sechstel einer Gesamtlänge des Balkens 5 entspricht. Anders ausgedrückt weist der Abschnitt 24 mindestens eine Länge von einem Sechstel der Gesamtlänge des Balkens 25 auf, wenn der Bordcomputer 22 den Fahrer des Kraftfahrzeugs 21 informieren möchte, dass eine Maßnahme (Beschleunigen oder Absenken der Geschwindigkeit) zur Verbesserung des aktuellen Energieverbrauchs existiert.

### BEZUGSZEICHENLISTE

- 1: Vorrichtung zur Bestimmung der Fahrstrategie
- 2: Eingabevorrichtung
- 3: Route
- 4: aktuelle Fahrzeugeinstellung
- 11: Fahrtdauer-Optimierung
- 12: Betriebskosten-Optimierung
- 13: Optimierung nach Attraktivität
- 14: Optimierung nach Sicherheit
- 21: Kraftfahrzeug
- 22: Bordcomputer
- 23: Anzeige
- 24: Balkenabschnitt
- 25: Balken
- 26: Y-Achse
- 27: X-Achse
- 28: Armaturenbrett
- 29: Normalenvektor des Kraftfahrzeugs
- A: Attraktivität
- B: Betriebskosten
- F: Fahrtdauer
- S: Sicherheit

## Patentansprüche

1. Verfahren zur Bestimmung einer optimalen Fahrstrategie eines Kraftfahrzeugs (21) für eine Fahrt von einem Startpunkt zu einem Zielpunkt, wobei die Bestimmung der optimalen Fahrstrategie die Ermittlung einer Route (3) von dem Startpunkt zu dem Zielpunkt umfasst,
**dadurch gekennzeichnet,**
**dass** die Fahrstrategie in Abhängigkeit von mindestens zwei Parametern (A, B, F, S) automatisch optimiert wird, welche ausgewählt sind aus einer Gruppe umfassend eine Attraktivität (A) der Route (3) für einen Insassen des Kraftfahrzeugs (21),
eine Fahrtdauer (F), welche von dem Kraftfahrzeug (21) zur Fahrt über die Route (3) benötigt wird,
einen Komfort, welchem ein Insasse während der Fahrt über die Route (3) ausgesetzt ist,
Betriebskosten (B), welche sowohl für die Bestimmung der Fahrstrategie als auch für die Fahrt über die Route (3) mit dem Kraftfahrzeug (21) aufzubringen sind, und
eine Sicherheit (S), welcher ein Insasse während der Fahrt über die Route (3) ausgesetzt ist.

2. Verfahren nach Anspruch 1, **dadurch gekennzeichnet, dass** jeder der mindestens zwei Parameter (A, B, F, S) gewichtet wird.

3. Verfahren nach Anspruch 1 oder 2, **dadurch gekennzeichnet, dass** die Sicherheit (S) der zu bestimmenden Route (3) abhängig von mindestens einem Merkmal bestimmt wird, welches ausgewählt ist aus einer Gruppe umfassend
eine Anzahl von Polizeistationen, welche sich innerhalb eines vorbestimmten Abstands zu der Route (3) befinden,
einen Anteil von im Dunkeln beleuchteten Abschnitten der Route (3),
einen Anteil von Abschnitten der Route (3), welche durch Ortschaften verlaufen,
eine Anzahl von Unfallschwerpunkten auf der Route (3),
eine Anzahl von Pannenschwerpunkten auf der Route (3),
eine Anzahl von Gefahrenpunkten auf der Route (3),
einen Anteil von gesicherten Abschnitten der Route (3),
einen Anteil von Abschnitten der Route (3) mit einer Geschwindigkeitsbegrenzung,
auf der Route (3) vorausgesagte Wetterinformationen, und
einen Anteil von Abschnitten der Route (3) mit einer starken Längs- oder Querbeschleunigung.

4. Verfahren nach einem der vorhergehenden Ansprüche, **dadurch gekennzeichnet, dass** der Komfort der zu bestimmenden Route (3) abhängig von mindestens einem Merkmal bestimmt wird, welches ausgewählt ist aus einer Gruppe umfassend
einen Anteil von Abschnitten der Route (3), bei welchen eine Querbeschleunigung des Kraftfahrzeugs größer als ein erster vorbestimmter Wert ist,
einen Anteil von Abschnitten der Route (3), bei welchen eine positive Beschleunigung des Kraftfahrzeugs (21) größer als ein zweiter vorbestimmter Wert ist,
einen Anteil von Abschnitten der Route (3), bei welchen eine negative Beschleunigung des Kraftfahrzeugs (21) größer als ein dritter vorbestimmter Wert ist,
einen Anteil von Abschnitten der Route, welche einen unebenen Bodenbelag aufweisen, und.
ein Klima auf der Route (3).

5. Verfahren nach einem der vorhergehenden Ansprüche, **dadurch gekennzeichnet, dass** der Komfort der zu bestimmenden Route (3) abhängig von einem Fahrspaß bestimmt wird.

6. Verfahren nach einem der vorhergehenden Ansprüche, **dadurch gekennzeichnet, dass** die Attraktivität (A) der zu bestimmenden Route (3) abhängig von mindestens einem Merkmal bestimmt wird, welches ausgewählt ist aus einer Gruppe umfassend
eine Anzahl von Sehenswürdigkeiten, welche sich innerhalb eines vorbestimmten Abstands zu der Route (3) befinden,
eine vorgegebene Klassifizierung der Sehenswürdigkeiten,
eine Information über ein auf der Route (3) vorausgesagtes Wetter, und
ein Straßenbelag von Abschnitten der Route (3).

7. Verfahren nach einem der vorhergehenden Ansprüche, **dadurch gekennzeichnet, dass** abhängig von der Fahrstrategie mindestens ein Parameter eingestellt wird, welcher ausgewählt ist aus einer Gruppe umfassend
eine aktuelle Fahrzeugeinstellung (4), welche eine aktuelle einem Antrieb des Kraftfahrzeugs (21) zugeführte Leistung, eine auf Räder des Kraftfahrzeugs (21) ausgeübte Bremskraft, eine Drehzahl, einen eingelegten Gang des Kraftfahrzeugs (21) und eine Einstellung von Fahrerassistenzsystemen des Kraftfahrzeugs (21) umfasst,
Wahl eines Verkehrsinformationsanbieters, und
eine Sollenergiemenge im Energiespeicher eines Hybridantriebs.

8. Verfahren nach einem der vorhergehenden Ansprüche, **dadurch gekennzeichnet, dass** das Verfahren zur Bestimmung der optimalen Fahrstrategie mindestens einen Informationsparameter berücksichtigt, welcher ausgewählt ist aus einer Informationsparametergruppe umfassend
eine aktuelle Verkehrsinformation,
ein Höhenprofil der zu bestimmenden Route (3),
ein Fahrzeit-Mittelwert auf einem Abschnitt der zu bestimmenden Route (3) in Abhängigkeit von einer Uhrzeit, einer Jahreszeit und einem Wochentag einer Zeit, zu welcher der entsprechende Abschnitt voraussichtlich befahren wird,
ein Kraftstoffverbrauchs-Mittelwert auf einem Abschnitt der zu bestimmenden Route (3) in Abhängigkeit von einer Uhrzeit, einer Jahreszeit und einem Wochentag einer Zeit, zu welcher der entsprechende Abschnitt voraussichtlich befahren wird,
ein Zeitverhalten einer Ampelschaltung auf der zu bestimmenden Route (3),
Kosten einer Benutzung eines Abschnitts der zu bestimmenden Route (3),
Kosten für die Verkehrsinformation,
Verschleiß des Kraftfahrzeugs (21),
Gewicht des Kraftfahrzeugs (21) einschließlich Beladung,
Energieverbrauch einer Vorrichtung des Kraftfahrzeugs (21), welche nicht einem Antrieb des Kraftfahrzeugs (21) zugeordnet ist,
Sollenergiemenge im Energiespeicher eines Hybridantriebs des Kraftfahrzeugs (21),
Bahnschranken,
eine Straßenqualität,
Geschwindigkeitsbegrenzungen allgemeiner Art,
Geschwindigkeitsbegrenzungen, welche abhängig von Wettergegebenheiten sind,
individuelle Genehmigungen zur Benutzung von Abschnitten der Route (3),
maximale Durchfahrtshöhen,
eine Schneekettenpflicht,
Routenabschnitte, welche ein geländegängiges Kraftfahrzeug erfordern,
ein Verschleiß eines Hybridpuffers durch Ladezyklen,
einen Standort von preiswerten Tankstellen,
eine maximale Fahrzeit,
gesetzliche Vorschriften,
einen Ausschluss von vorgebbaren Routenabschnitten,
eine Mindestgeschwindigkeit des Kraftfahrzeugs (21),
eine im Kraftfahrzeug (21) vorhandene Energiemenge, und
eine Verkehrsflussinformation, welche ausgehend von Informationen über eine tageszeitabhängige Ampelrotphaseninformation und/oder über eine tageszeitabhängige Stauwahrscheinlichkeit bestimmt wird.

9. Verfahren nach Anspruch 8, **dadurch gekennzeichnet, dass** mindestens einer der Informationsparameter aus der Informationsparametergruppe durch Sensordaten bestimmt wird, welche durch Sensoren des Kraftfahrzeugs (21) erfasst werden.

10. Verfahren nach Anspruch 9, **dadurch gekennzeichnet, dass** der mindestens eine Informationsparameter, welcher durch Sensordaten bestimmt wird, an ein weiteres Kraftfahrzeug weitergeleitet werden kann, um dort als ein Informationsparameter der Informationsparametergruppe verarbeitet zu werden.

11. Verfahren nach einem der vorhergehenden Ansprüche, **dadurch gekennzeichnet, dass** das Verfahren eine individuelle Fahrweise des Fahrers bei der Bestimmung der optimalen Fahrstrategie berücksichtigt und/oder die individuelle Fahrweise des Fahrers lernt.

12. Verfahren nach einem der vorhergehenden Ansprüche, **dadurch gekennzeichnet, dass** die Fahrstrategie ein aktuelles Fahrverhalten des Kraftfahrzeugs (21) bestimmt, und dass das aktuelle Fahrverhalten des Kraftfahrzeugs (21) jederzeit durch manuelle Eingriffe eines Fahrers des Kraftfahrzeugs (21) veränderbar ist.

13. Verfahren nach Anspruch 12, **dadurch gekennzeichnet, dass** das aktuelle Fahrverhalten nach einem manuellen Eingriff wieder durch die Fahrstrategie bestimmt wird.

14. Verfahren nach einem der vorhergehenden Ansprüche, **dadurch gekennzeichnet, dass** mindestens eine Bedingung einer Gruppe von Bedingungen umfassend
- Start-Stopp-Häufigkeit,
- notwendige Tankstopps,
- auszunutzende Gefälle, und
- zu vermeidende Steigungen
für die als eine optimale Route in Betracht kommende Route bestimmt wird und zur Bestimmung der optimalen Fahrstrategie berücksichtigt wird.

15. Verfahren nach einem der vorhergehenden Ansprüche, **dadurch gekennzeichnet, dass** bei der Ermittlung der Route (3) vorausgesetzt wird, dass Auslaufmöglichkeiten und Gefällestrecken durch den Schleppbetrieb und/oder Stopps durch eine Start-Stopp-Automatik des Kraftfahrzeugs (21) optimal genutzt werden.

16. Verfahren nach einem der vorhergehenden Ansprüche, **dadurch gekennzeichnet, dass** über ein auf einer optimalen Route erreichbares Energieverbrauchsziel informiert wird.

17. Verfahren nach einem der vorhergehenden Ansprüche, **dadurch gekennzeichnet, dass** über eine Abweichung von einem über ein auf einer optimalen Route erreichbares Energieverbrauchsziel informiert wird.

18. Verfahren nach einem der vorhergehenden Ansprüche, **dadurch gekennzeichnet, dass** über mindestens eine Maßnahme zur Verringerung eines Energieverbrauchs des Kraftfahrzeugs (21) ausgewählt aus einer Gruppe von Maßnahmen umfassend
- eine Änderung der Geschwindigkeit des Kraftfahrzeugs (21),
- eine Änderung einer Flussmenge einer einem Motor des Kraftfahrzeugs (21) aktuell zur Energieerzeugung zugeführten Menge,
- eine Änderung des Ganges, in welchem das Kraftfahrzeug (21) betrieben wird, und
- eine Änderung der optimalen Route
informiert wird.

19. Vorrichtung zur Bestimmung einer optimalen Fahrstrategie eines Kraftfahrzeugs (21) für eine Fahrt von einem Startpunkt zu einem Zielpunkt, wobei die Vorrichtung (1, 2; 22) derart ausgestaltet ist, dass die Vorrichtung (1, 2; 22) bei der Bestimmung der optimalen Fahrstrategie eine Route (3) von dem Startpunkt zu dem Zielpunkt bestimmt,
**dadurch gekennzeichnet,**
**dass** die Vorrichtung (1, 2; 22) derart ausgestaltet ist, dass die Vorrichtung (1, 2; 22) die Fahrstrategie automatisch in Abhängigkeit von mindestens zwei Parametern (A, B, F, S) optimiert, welche ausgewählt sind aus einer Gruppe umfassend
eine Attraktivität (A) der Route (3) für einen Insassen des Kraftfahrzeugs (21),
eine Fahrtdauer (F), welche von dem Kraftfahrzeug (21) zur Fahrt über die Route (3) benötigt wird,
einen Komfort, welchem ein Insasse während der Fahrt über die Route (3) ausgesetzt ist,
Betriebskosten (B), welche sowohl für die Bestimmung der Fahrstrategie als auch für die Fahrt über die Route (3) mit dem Kraftfahrzeug (21) aufzubringen sind, und
eine Sicherheit (S), welcher ein Insasse während der Fahrt über die Route (3) ausgesetzt ist.

20. Vorrichtung nach Anspruch 19, **dadurch gekennzeichnet, dass** die Vorrichtung (1, 2; 22) eine Eingabevorrichtung (2) umfasst, welche derart ausgestaltet ist, dass mit der Eingabevorrichtung (2) eine Gewichtung jedes der mindestens zwei Parameter (A, B, F, S) vorgebbar ist.

21. Vorrichtung nach Anspruch 19 oder 20, **dadurch gekennzeichnet, dass** die Vorrichtung (1, 2; 22) zur Durchführung des Verfahrens nach einem der Ansprüche 1-18 ausgestaltet ist.

22. Kraftfahrzeug-Anzeige, **dadurch gekennzeichnet, dass** die Anzeige (23) derart ausgestaltet ist, dass die Anzeige (23) kombiniert eine Abweichung von einem bestimmten Optimum eines Betriebszustands des Kraftfahrzeuges (21) und eine Maßnahme zur Verbesserung des Betriebszustands darstellt.

23. Kraftfahrzeug-Anzeige nach Anspruch 22, **dadurch gekennzeichnet, dass** der Betriebszustand ein Energieverbrauchsbetriebszustand des Kraftfahrzeugs (21) ist.

24. Kraftfahrzeug-Anzeige nach Anspruch 22 oder 23, **dadurch gekennzeichnet, dass** die Anzeige (23) eine erste Achse (26) und eine zweite Achse (27), welche zur ersten Achse (26) senkrecht ist, umfasst, dass die Anzeige (23) die Abweichung mit einer einer Größe der Abweichung entsprechenden Auslenkung in Richtung der ersten Achse (6) darstellt und die Maßnahme mit einer einer Größe der Maßnahme entsprechenden Auslenkung in Richtung der zweiten Achse (27) darstellt.

25. Kraftfahrzeug-Anzeige nach Anspruch 24, **dadurch gekennzeichnet, dass** die erste Achse (21) im Wesentlichen parallel zu einem Normalenvektor (29) des Kraftfahrzeugs (21) verläuft.

26. Kraftfahrzeug-Anzeige nach Anspruch 24 oder 25, **dadurch gekennzeichnet, dass** die Anzeige (23) derart ausgestaltet ist, dass sie die Abweichung in Form eines Balkens (25) darstellt, welcher sich senkrecht zur ersten Achse (26) erstreckt, und dass der Balken (25) für den Fall, dass keine Abweichung von dem optimalen Zustand vorhanden ist, in der Mitte der Anzeige (23) angeordnet ist.

27. Kraftfahrzeug-Anzeige nach Anspruch 26, **dadurch gekennzeichnet, dass** die Maßnahme eine vorgeschlagene Änderung eines Betriebsparameters des Kraftfahrzeugs (21) ist, dass die Anzeige (23) eine positive vorgeschlagene Änderung des Betriebsparameters darstellt, indem sie einen Abschnitt (24) des Balkens (25), welcher in der Mitte des Balkens (25) beginnt und in einer ersten Richtung parallel zur zweiten Achse (27) verläuft, von dem Rest des Balkens (25) unterscheidbar darstellt, dass die Anzeige (23) eine negative vorgeschlagene Änderung darstellt, indem sie einen Abschnitt (4) des Balkens (25), welcher in der Mitte des Balkens (25) beginnt und in einer zweiten Richtung entgegengesetzt zur ersten Richtung parallel zur zweiten Achse (27) verläuft, von dem Rest des Balkens unterscheidbar darstellt, und dass eine Länge des Abschnitts (24) des Balkens (25) ein Maß für eine Größe der vorgeschlagene Änderung ist.

28. Kraftfahrzeug-Anzeige nach Anspruch 27, **dadurch gekennzeichnet, dass** der Betriebsparameter eine Flussmenge einer einem Motor des Kraftfahrzeugs (21) zur Erzeugung von Energie zuzuführenden Menge ist oder eine Fahrgeschwindigkeit des Kraftfahrzeugs (21) ist.

29. Kraftfahrzeug mit einer Vorrichtung (1, 2; 22) nach einem der Ansprüche 19-21 und einer Kraftfahrzeug-Anzeige (23) nach einem der Ansprüche 22-28.

30. Kraftfahrzeug nach Anspruch 29, **dadurch gekennzeichnet, dass** die Anzeige (23) derart ausgestaltet ist, dass das bestimmte Optimum des Betriebszustands dann vorliegt, wenn der Verbrauch dem für die optimale Fahrroute bestimmten Verbrauch entspricht.
